# EUROPEAN PATENT APPLICATION

(11) **EP 3 730 907 A1**
(43) Date of publication of application: **28.10.2020**
(21) Application number: 19461530.8
(22) Date of filing: 27.04.2019
(51) Int. Cl.: G01F 1/66, G01F 15/00

(54) **AN ASSEMBLY FOR FLOW MEASUREMENT AND CONTROL**

(71) Applicant: Hero Labs Sp. z o.o., 93-578 Lodz (PL)
(72) Inventor: ZAJAC, Krystian, 93-578 Lodz (PL)
(74) Representative: Kancelaria Eupatent.pl Sp. z.o.o

(57) **Abstract**

An assembly for flow measurement and control, comprising a valve (10) and an ultrasonic flowmeter (20A, 20B), wherein the ultrasonic flowmeter comprises two ultrasonic transducers (21, 22) for generating and receiving an ultrasonic wave across an ultrasonic wave path (30) between the first transducer (21) and the second transducer (22), characterized in that a passageway (12) of the valve (10) is located within the ultrasonic wave path (30).

## Description

### TECHNICAL FIELD

The present disclosure relates to an assembly for flow measurement and control, comprising a shut-off valve integrated with an ultrasonic flowmeter.

### BACKGROUND

Various methods and devices for measuring flow of fluids are known. One of commonly known types of flowmeters are mechanical flowmeters which comprise mechanical moving elements propelled by a flow of fluid. An example of a mechanical flowmeter is a piston meter which is commonly used for domestic flow measurements. It comprises a piston rotating within a chamber of known volume, wherein each rotation of the piston corresponds to a known amount of water passing through the piston chamber. Since mechanical flowmeters comprise moving parts, they are prone to malfunction or tampering.

Other type of flowmeters is a magnetic flowmeter which uses a magnetic field applied to the metering tube which results in a potential difference proportional to the flow velocity perpendicular to the flux lines. The potential difference is sensed by electrodes aligned perpendicular to the flow and the applied magnetic field. However such type of the flowmeter requires a conducting fluid and a non-conducting pipe liner. Therefore its application is limited.

Other type of flowmeters is an ultrasonic flow meter which may be a Doppler flow meter or a transit time flow meter. The Doppler flow meter measures the Doppler shift resulting from reflecting an ultrasonic beam off the particulates in flowing fluid. For the Doppler principle to work there must be a high enough density of sonically reflective materials such as solid particles or air bubbles suspended in the fluid. Therefore the use of Doppler flow meters is limited only to specific applications. The ultrasonic transit time flow meters measure the difference of the transit time of ultrasonic pulses propagating in and against the direction of flow. This time difference is a measure for the average velocity of the fluid along the path of the ultrasonic beam. The advantage of the ultrasonic flowmeters is that they have no moving parts and therefore are more durable and maintain their high accuracy and sensitivity over time. The ultrasonic transit time flow meters are particularly accurate at measuring low flow rates and are adequate for measuring flows of both liquids and gases.

The flowmeters are separate devices and are usually installed in series with existing valves. As a result, space requirements for such a system (a valve and the flowmeter) are significantly higher, especially in case of the ultrasonic transit time flow meters which have a significant length due to their construction which needs to have a necking section of particular length for increasing the flow rate of a fluid and therefore their accuracy.

A US patent application US20170356779A1 presents a valve integrated with a flowmeter, wherein the valve is positioned in series upstream of the flowmeter. The meter includes a valve member positioned within the valve in the pressure vessel for movement between an open position allowing normal flow through the flow meter and a flow restriction position in which flow through the flow meter is limited to less than the normal flow and an electrically operable control device for controlling movement of the valve member including a dry-side magnet assembly and a wet-side magnet assembly.

A US patent application US20120090702A1 relates to metering of water, being especially useful for agricultural purposes and other applications. An integrated water meter and cut-off valve with electronic controls is provided. The integrated water meter comprises a hollow body having an inlet port and an outlet port for a fluid and a passage connecting the ports; a generator of ultrasonic pulses in operational communication with the body, operationally connected to a ultrasonic transmitter transducer and a ultrasonic receiver transducer, and a diaphragm valve inside the passage in fluid communication with the passage, wherein the valve is positioned in series with the flowmeter.

However, in each of the presented cases, the valve and flowmeter system occupies significant amount of space, which is not always available in existing installations.

Therefore there is a need to provide a flow measurement and valve assembly which is more compact.

### SUMMARY OF THE INVENTION

There is disclosed herein an assembly for flow measurement and control, comprising a valve and an ultrasonic flowmeter, wherein the ultrasonic flowmeter comprises two ultrasonic transducers for generating and receiving an ultrasonic wave across an ultrasonic wave path between the first transducer and the second transducer, characterized in that a passageway of the valve is located within the ultrasonic wave path.

The assembly may further comprise reflectors located within the ultrasonic wave path for reflecting the ultrasonic wave, wherein the passageway of the valve is located between the reflectors.

The inner diameter of the passageway of the valve may be smaller than an inner diameter of the passageway of the ultrasonic flowmeter.

The ultrasonic flowmeter may comprise two sections located at opposite ends of the valve.

The inner diameter of the ultrasonic flowmeter sections may decrease respectively towards ends of the ultrasonic flowmeter sections located at the valve.

The valve and the ultrasonic flowmeter sections may be connected to each other by a threaded connection.

The valve and the ultrasonic flowmeter sections may be connected to each other by an attachment assembly comprising flanges protruding from the ultrasonic flowmeter sections and screws and nuts that press the flanges towards each other.

The assembly may further comprise seals between the valve and the ultrasonic flowmeter sections.

### BRIEF DESCRIPTION OF FIGURES

The device presented herein is presented by means of example embodiments on a drawing, wherein:
Fig. 1 presents an assembly for flow measurement and control in a longitudinal cross-section view, with a valve in an open position;
Fig. 2 presents the assembly in a longitudinal cross-section view, with the valve in a closed position;
Fig. 3 presents the assembly in a front view.

### DETAILED DESCRIPTION

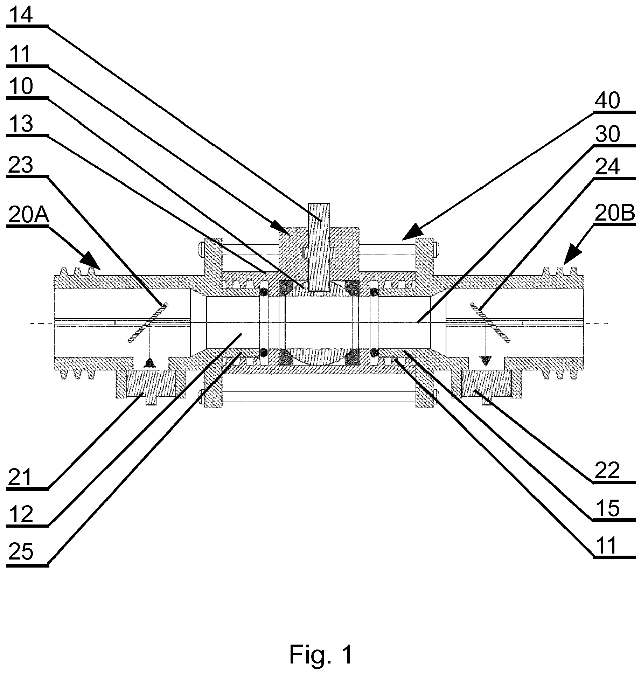

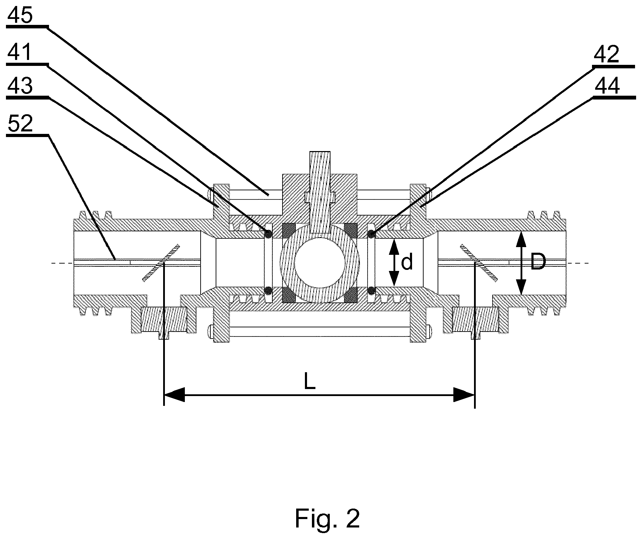

Figs. 1 and 2 present an assembly for flow measurement and control in a longitudinal cross-section view, with a valve in an open and closed position, respectively. The assembly comprises a valve 10 and an ultrasonic flowmeter that comprises flowmeter sections 20A and 20B. The ultrasonic flowmeter comprises two ultrasonic signal transducers 21, 22 for generating and receiving an ultrasonic wave and an ultrasonic wave path 30 between the first and the second transducer 21, 22.

The valve 10 has a body 11 with a passageway 12 formed therein. A valve member 13 is controlled by an actuator 14 to open or close the passageway 12. Various types of valves can be used, such as a ball valve as presented herein, or a gate valve..

In the assembly presented herein, the passageway 12 of the valve is located within the ultrasonic wave path 30.

In a preferred embodiment as shown in Figs. 1 and 2, the assembly comprises two acoustic wave reflectors 23, 24 located within the ultrasonic wave path 30 for reflecting the ultrasonic wave and directing it from one transducer 21, 22 to another transducer 22, 21 (i.e. from the first transducer 21 to the second transducer 22 and from the second transducer 22 to the first transducer 21). In that case, the passageway 12 of the valve 10 is located between the first reflector 23 and the second reflector 24. When the valve 10 is in the open position, as shown in Fig. 1, the ultrasonic flowmeter may operate according to a known principle, such that first an ultrasonic wave is generated by the first ultrasonic transducer 21 and is reflected from the first reflector 23 and from the second reflector 24 and is received by the second ultrasonic transducer 22, next an ultrasonic wave is generated by the second ultrasonic transducer 22 is reflected from the second reflector 24 and by the first reflector 23 and is received by the first ultrasonic transducer 21. The difference between the times of travel (TOF - time of flight) of the ultrasonic wave from the first transducer 21 to the second transducer 22 and from the second transducer 22 to the first transducer 21 is calculated and it is proportional to the velocity of the flow of the liquid through the valve.

Preferably, in order to increase the linear flow rate and in consequence the accuracy of the flow measurement, the passageway 12 of the valve 10 may have a diameter smaller than the diameter of the pipeline in which the assembly is installed. Therefore, an inner diameter D of the passageway of the ultrasonic flowmeter sections 20A, 20B may decrease towards their ends 25, 26 to an inner diameter d of the passageway 12 of the valve 10.

In one embodiment, the valve 10 may have a thread 15 for coupling the valve with first section 20A and the second section 20B of the ultrasonic flowmeter, is these sections 20A, 20B would be terminated with threads (not shown).

Alternatively, as shown in Figs. 1 and 2, the ends 25, 26 of the ultrasonic flowmeter do not need to be threaded and may have a plain diameter corresponding with the diameter of the valve, such as to be coupled with the valve by means of an attachment assembly 40 arranged outside the valve. The attachment assembly 40 is configured to secure the valve 10 and the first and second sections 20A, 20B of the ultrasonic flowmeter in a tight manner, and the connections between the ends 25, 26 of the flowmeter sections and the valve 10 are sealed by means of seals 41, 42.

The attachment assembly 40 may comprise flanges 43, 44 protruding from the body of the sections 20A, 20B and screws 45 and nuts that protrude through the flanges 43, 44 and press them towards each other. Such arrangement of the attachment assembly 40 is advantageous since it provides high alignment accuracy of the ultrasonic flowmeter parts 20A, 20B with respect to each other, and in particular the alignment of the reflectors 23, 24 located within the fluid path. The alignment of the reflectors 23, 24 is important in order that the ultrasonic wave generated by the first transducer 21 and reflected by the first reflector 23 is directed towards the second reflector 24 and subsequently towards the second transducer 22 and vice-versa.

Preferably a ratio between a length L of the ultrasonic wave path 30 between the reflectors 23, 24 and an inner diameter d of the valve is equal from.4 to 10.

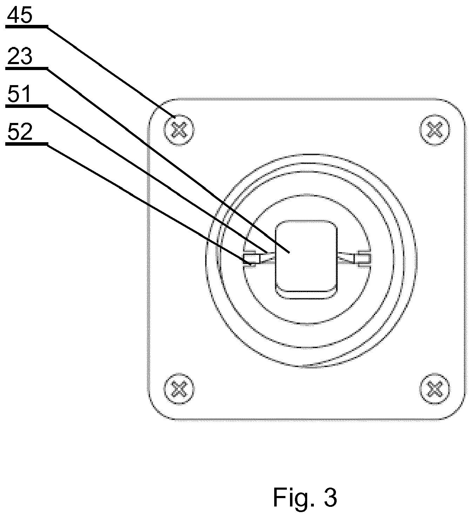

Fig. 3 presents the assembly in a front view. The reflectors 23, 24 may be fixed respectively to the inner wall of ducts of the first part 20A and the second part 20B by means of protrusions 51 which are press-fitted into sockets 52, wherein the sockets 52 are located on the surface of the inner walls.

Owing to the presented flow measurement and valve assembly in which the ultrasonic flowmeter comprises two separate sections and the valve is arranged between these sections, the length of the assembly is significantly reduced as compared to prior art assemblies, wherein the flowmeter is located in series with the valve, upstream or downstream. The assembly as presented herein can be more easily implemented into existing pipe systems without significant redesign which could be necessary due to lack of free space. Moreover since the longer the distance between the ultrasonic transducers the more accurate the flow measurements are, arranging the valve between the two transducers is even more advantageous as it provides the necessary distance without increasing the length of the assembly.

## Claims

**1.** An assembly for flow measurement and control, comprising a valve (10) and an ultrasonic flowmeter (20A, 20B), wherein the ultrasonic flowmeter comprises two ultrasonic transducers (21, 22) for generating and receiving an ultrasonic wave across an ultrasonic wave path (30) between the first transducer (21) and the second transducer (22),
**characterized in that**
a passageway (12) of the valve (10) is located within the ultrasonic wave path (30).

**2.** The assembly according to claim 1, further comprising reflectors (23, 24) located within the ultrasonic wave path (30) for reflecting the ultrasonic wave, wherein the passageway (12) of the valve (10) is located between the reflectors (23, 24).

**3.** The assembly according to any of previous claims, wherein an inner diameter (d) of the passageway (12) of the valve (10) is smaller than an inner diameter (D) of the passageway of the ultrasonic flowmeter (20A, 20B).

**3.** The assembly according to any of previous claims, wherein the ultrasonic flowmeter comprises two sections (20A, 20B) located at opposite ends of the valve (10).

**4.** The assembly according to claim 3, wherein the inner diameter (D) of the ultrasonic flowmeter sections (20A, 20B) decreases respectively towards ends (25, 26) of the ultrasonic flowmeter sections (20A, 20B) located at the valve (10).

**5.** The assembly according to any of claims 3-4, wherein the valve (10) and the ultrasonic flowmeter sections (20A, 20B) are connected to each other by a threaded connection.

**6.** The assembly according to any of claims 3-4, wherein the valve (10) and the ultrasonic flowmeter sections (20A, 20B) are connected to each other by an attachment assembly (40) comprising flanges (43, 44) protruding from the ultrasonic flowmeter sections (20A, 20B) and screws (45) and nuts that press the flanges (43, 44) towards each other.

**7.** The assembly according to claim 6, further comprising seals (41, 42) between the valve (10) and the ultrasonic flowmeter sections (20A, 20B).
